# EUROPÄISCHE PATENTSCHRIFT

(11) **EP 0 566 868 B1**
(45) Veröffentlichungstag und Bekanntmachung des Hinweises auf die Patenterteilung: **28.02.1996**
(21) Anmeldenummer: 93104392.1
(22) Anmeldetag: 18.03.1993
(51) Int. Cl.: F02C 7/18

(54) **Verfahren zum Betrieb einer Gasturbogruppe**
Method of operating a gas turbine plant
Procédé pour utilisation d'une installation pour turbine à gaz

(30) Priorität: 21.04.1992 DE 4213023
(43) Veröffentlichungstag der Anmeldung: 27.10.1993
(73) Patentinhaber: ASEA BROWN BOVERI AG, CH-5401 Baden (CH)
(72) Erfinder: Frutschi, Hans Ulrich, CH-5223 Riniken (CH)
(74) Vertreter: Klein, Ernest

(56) Entgegenhaltungen:
- CH-A- 364 656
- US-A- 2 839 892
- PATENT ABSTRACTS OF JAPAN vol. 9, no. 326 (M-441)(2049) 21. Dezember 1985,& JP-A-60 159 309 (TOSHIBA) 20 August 1985

## Beschreibung

### Technisches Gebiet

Die vorliegende Erfindung betrifft ein Verfahren zum Betrieb einer Gasturbogruppe gemäss Oberbegriff des Anspruchs 1.

### Stand der Technik

In einer thermischen Kraftwerksanlage, insbesondere einer Luftspeicheranlage, können für die Turbinenkühlung besondere Probleme auftreten. Diese entstehen durch das für die Kompatibilität mit einem wirtschaftlich tragbaren Druckluftspeicher erforderlichen sehr hohen Druckverhältnis von etwa 30:1 bis 70:1, welches, wiederum aus wirtschaftlichen Gründen, mindestens eine Zwischenerhitzung der Expansion der Turbine erfordert. Dabei ergibt sich für die Hochdruckturbine, im folgenden HD-Turbine genannt, ein wesentlich kleineres Wärme- bzw. Temperaturgefälle als für die Niederdruckturbine, im folgenden ND-Turbine genannt. Bei einer Luftspeichergasturbine, bei welcher der Verdichter mit einer Zwischenkühlung ausgerüstet ist, wird durch die motorisch arbeitende elektrische Maschine Druckluft in eine Speicherkaverne befördert. Ein Luft/Wasser-Wärmetauscher kühlt die von der letzten Kompressoreinheit kommende warme Druckluft zwecks Minderung ihres spezifischen Volumens ab und führt die Wärme in eine Druckwasser-Speicheranlage über, wobei während dieses sogenannten Ladebetriebes die entsprechenden Absperrorgane geöffnet sind. Soll nun aus der gespeicherten Druckluft wieder elektrische Energie erzeugt werden, wird über eine Steuerung die Verdichtergruppe abgefahren. Durch Oeffnen des entsprechenden Abschlussorgans wird die Turbinengruppe, beispielsweise bestehend aus einer HD-Turbine, einer ND-Turbine und der nun generatorisch zu betreibenden elektrischen Maschine angefahren. Dies geschieht zunächst nur durch Druckluft aus dem Speicher, welche im Wärmetauscher durch das gespeicherte Heisswasser vorgewärmt wird. Nach dem Zünden in der Brennkammer kann die Produktion von elektrischer Energie aufgenommen werden. Es ist aber auch möglich, die Anlage bei entsprechender Disposition der Absperrorgane und Kupplungen als Gasturbine durchgeschaltet arbeiten zu lassen. Dabei kann gleichzeitig etwas Luft gespeichert werden, oder aus der Kaverne entnommen werden. Eine solche Anlage kann den heutigen Wirtschaftlichkeitsvorgaben bezüglich Verminderung des Brennstoffverbrauches nicht mehr Stand halten, wobei hinzu kommt, dass solche Anlagen die heutigen vorzuweisenden maximalen Schadstoff-Emissionswerte nicht zu erfüllen vermögen. Zwar ist es richtig, dass zur Erzeugung von Dampf ein Abhitzekessel zugeschaltet werden kann. Der so erzeugte Dampf kann einer Dampfturbinengruppe zugeführt werden, oder er wird der Gasturbinengruppe nach bekannten Arten direkt zugeleitet. Ob die eine oder die andere Methode zur Nutzung des Dampfes bevorzugt wird, hängt von der Betriebsdauer im Turbinenbetrieb ab. Für weniger als ca. 2-4 Stunden pro Tag wird Dampfeinblasung richtig sein. Wird nun eine solche thermische Kraftwerksanlage optimiert, ergibt sich bei den dem Stand der Technik entsprechenden Heissgastemperaturen am Eintritt in die HD-Turbine eine derart hohe Austrittstemperatur der Rauchgase aus der HD-Turbine,dass diese nicht ohne weiteres als Kühlmittel für die ND-Turbine verwendet werden können. Deswegen wird die Turbine üblicherweise mit Kühlluft gekühlt, welche vor der Kaverne der Luftspeicheranlage entnommen wird, wie dies für die Kühlung von Turbinen üblich ist. Im durchgeschalteten Gasturbinenbetrieb könnte natürlich zur Vermeidung von Drosselverlusten die zur Turbine führende Kühlluft an druckmässig passender Stelle des Verdichters entnommen werden. Während dem der Verbrauch von Kühlluft für die Turbine bei gegebener Mischtemperatur an deren Eintritt vor allem den Turbinen-Wirkungsgrad durch Mischverluste reduziert, wirkt sich der Verbrauch an Kühlluft für die ND-Turbine sehr nachteilig aus, indem diese an der HD-Turbine vorbeigeht, also dort keine Arbeit leistet.

### Darstellung der Erfindung

Hier will die Erfindung Abhilfe schaffen. Der Erfindung, wie sie in den Ansprüchen gekennzeichnet ist, liegt die Aufgabe zugrunde, bei einem Verfahren der eingangs genannten Art Massnahmen vorzuschlagen, welche durch eine Kühlung einer oder mehrerer Strukturen der Gasturbogruppe eine Steigerung der Wirtschaftlichkeit und eine Minimierung der Schadstoff-Emissionen mit sich bringen, demnach die oben dargelegten Nachteile zu beheben vermag.

Der wesentliche Vorteil der Erfindung ist darin zu sehen, dass die Kühlung der Strukturen, also bespielsweise des niederdruckseitigen Wärmeerzeuger, der ND-Turbine usw. mit einer bestimmten Menge Abgase aus der HD-Turbine geschieht, indem dieser Teilgasstrom vorgängig seines Einsatzes vorzugsweise durch einen Wärmetauscher geleitet wird, der von einem Kühlluftstrom aus der Gasturbogruppe oder aus der Luftspeicheranlage durchströmt wird.

Ferner ist es ohne weiteres möglich, als Kühlungsmedium für den Wärmetauscher eine Dampfmenge aus dem Dampfkreislauf zu aktivieren.

Eine weitere Möglichkeit besteht darin, die Kühlung des Teilgasstromes direkt durch eine Eindüsung von Wasser und/oder Dampf zu bewerkstelligen.

Ein weiterer Vorteil der Erfindung ist darin zu sehen, dass die zu kühlenden Strukturen der Gasturbogruppe vom Teilgasstrom parallel oder in Serie durchströmt werden können.

Vorteilhafte und zweckmässige Weiterbildungen der erfindungsgemässen Aufgabenlösung sind in den weiteren Ansprüchen gekennzeichnet.

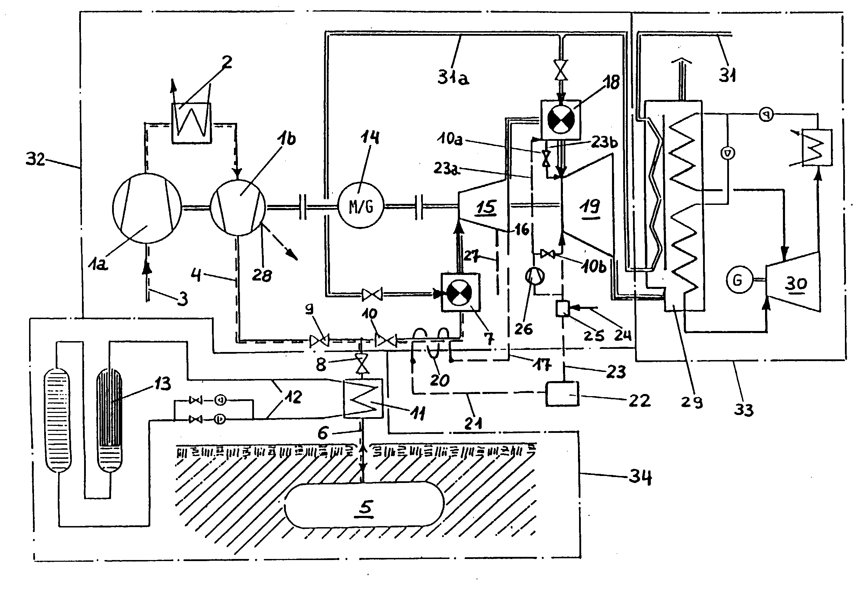

Im folgenden werden anhand der Zeichnung ein Ausführungsbeispiel der Erfindung näher erläutert. Alle für das unmittelbare Verständnis der Erfindung nicht erforderlichen Elemente sind fortgelassen. Die Strömungsrichtung der Medien ist mit Pfeilen angegeben.

### Kurze Beschreibung der Zeichnungen

Die einzige Figur zeigt:
eine Schaltung, bei welcher die Kühlung der ND-Turbine mit den Abgasen der HD-Turbine bewerkstelligt wird.

### Wege zur Ausführung der Erfindung, gewerbliche Verwertbarkeit

Die Figur zeigt eine Luftspeichergasturbine, bestehend aus einer Gasturbogruppe 32, einer Luftspeicheranlage 34 und einem Dampfkreislauf 33, in welchem die Abgase aus der Gasturbogruppe 32, im Sinne einer Kombianlage, kalorisch ausgenutzt werden. Eine Verdichtergruppe in der Gasturbogruppe 32, bestehend aus einem ersten Verdichter 1a, einem zweiten Verdichter 1b und einem dazwischen geschalteten Zwischenkühler 2, verdichtet die angesaugte Luft 3 und fördert sie über eine Leitung 4 in eine Kaverne 5 der Luftspeicheranlage 34. Diese Förderung der verdichteten Luft zu Kaverne 5 geschieht über eine weitere Leitung 6, welche von der ersten Leitung 4 abzweigt. Die Leitung 4 ist zugleich Förderungsstrang zu einem ersten Wärmeerzeuger 7 der Gasturbogruppe 32, wobei eine Reihe von Stellgliedern die betriebsmässige Schaltung der Leitungen 4, 6 untereinander übernehmen. Zunächst weist die Leitung 6 zur Kaverne 5 unmittelbar nach deren Abzweigung von der Leitung 4 ein Stellglied 8 auf, wobei stromauf und stromab desselben zwei weitere Stellglieder 9, 10 die Zuschaltbarkeit der jeweiligen Leitung gewährleisten. Eine Förderung der verdichteten Luft zur Kaverne 5 geschieht, indem das erste Stellglied 9 in der Leitung 4 und das Stellglied 8 in der Leitung 6 offen sind, während das zweite Stellglied 10 in der Leitung 4 geschlossen bleibt. Durch Schliessen des Stellgliedes 8 in der Leitung 6 und gleichzeitiges Oeffnen der beiden Stellglieder 9, 10 in der Leitung 4 wird die Anlage als reine Gasturbogruppe durchgeschaltet und betrieben. Stromab des Stellgliedes 8 in der Leitung 6 zur Kaverne 5 wirkt ein Wärmetauscher 11, der über ein Leitungssystem 12 mit einem thermischen Speicher 13 verbunden ist. Dieser Speicher 13 nimmt die Verdichtungsenthalpie der letzten Verdichterstufe 1b auf, wobei die Verdichter durch die als Motor arbeitende elektrische Maschine 14 angetrieben werden und so die zu speichernde Energie aus dem Stromnetz beziehen. Die im thermischen Speicher 13 enthaltende Verdichtungsenthalpie wird der kalten Speicherluft im Entladebetrieb wieder zugeführt, so dass deren Arbeitsfähigkeit steigt. Es hat sich gezeigt, dass eine weitere Anhebung der Arbeitsmitteltemperatur mittels eines etwa mit einem gasförmigen Brennstoff betriebenen Wärmeerzeugers die Arbeitsfähigkeit nochmals signifikant erhöht, was von grossem ökonomischem Vorteil ist, denn die zusätzlichen Investitionen sind gemessen am Arbeitsgewinn klein. Erst so kann ein Luftspeicherkraftwerk überhaupt rentabel betrieben werden. Danebst muss aber berücksichtigt werden, dass um die Kosten für die Kaverne 5 so tief wie möglich zu halten, der Luftdruck so hoch wie möglich angesetzt werden muss: 50 bis 70 bar sind hier die Regel. Ein derart hoher Druck begünstigt aber die Entstehung von NOx im ersten Wärmeerzeuger 7, stromauf einer mit diesen Heissgasen zu beaufschlagenden HD-Turbine 15, was aus ökologischer Sicht unzulässig ist. Mit geeigneten Mitteln, beispielsweise durch Eindüsung von Ammoniak an geeigneter Stelle, lässt sich hier Abhilfe schaffen.

Was hingegen noch vorzusehen ist, betrifft die Kühlung der kalorisch belasteten Aggregate der Gasturbogruppe 32. Die Figur zeigt eine Schaltung, bei welcher die Kühlung der ND-Turbine 19 mit den Abgasen aus der HD-Turbine 15 geschieht. Ueber eine Kühlgasleitung 17 wird der HD-Turbine 15 an passender Entnahmestelle 16 ein Teilgasstrom entnommen und einem Wärmetauscher 20 zugeleitet. Der restliche überwiegende Abgasstrom aus der HD-Turbine 15 wird in einem weiteren nachgeschalteten Wärmeerzeuger 18 geleitet, in welchem eine neuerliche kalorische Aufbereitung stattfindet, bevor dieses Arbeitgas die ND-Turbine 19 beaufschlagt. Der genannte Wärmetauscher 20 wirkt in der Luftleitung 4, wobei hier der für Kühlzwecke noch viel zu heisse Abgasstrom 17 an der relativ kalten verdichteten Luft 4 durch Wärmetauschung abgekühlt wird. Der Wärmetauscher 20 kann selbstverständlich auch in einem Teilstrom der Luftleitung 4 liegen, welcher dann entsprechend stärker aufgewärmt wird. Diese relativ stark vorgewärmte Arbeitsluft kann dann, über eine nicht dargestellte Leitung, in den hochdruckseitigen Wärmeerzeuger 7 an passender Stelle eingeleitet werden. Dabei ist zu berücksichtigen, dass die durch die Leitung 4 strömende Luft relativ tiefe Temperaturen aufweist: Sowohl im durchgeschalteten Gasturbobetrieb 32 als auch im Entladebetrieb der Luftspeicheranlage 34 kann der Wärmetauscher 20 mit einem relativ kalten Luftmassenstrom betrieben werden. Im durchgeschalteten Gasturbobetrieb 32 sorgt die Zwischenkühlung, durch Zwischenkühler 2, in der Verdichtergruppe dafür, dass das Temperaturniveau tief bleibt. Im Entladebetrieb der Luftspeicheranlage 34 herrscht eine Temperaturniveau von etwa 200°C vor, was wesentlich unter dem üblichen Kühllufttemperaturniveau von 360-400°C liegt. Um das Druckgefälle des Kühlstromes zu erhöhen, wird das zu Kühlzwecken der verschiedenen Strukturen der Gasturbogruppe aus der HD-Turbine 15 entnommene Teilkühlgasmenge 17 vorzugsweise vor Expansionsende dieser Turbine 15 entnommen, wie dies Anzapfleitung 27 versinnbildlichen will. Die genannten Strukturen lassen sich dabei parallel oder in Serie schalten, je nach kalorischem Belastungsgrad und Kühlpotential der Teilkühlgasmenge 17. Bei Parallelschaltung unterteilt sich der Teilkühlgasstrom 23, beispielsweise nach dem Druckerhöhungsgebläse 26, in zwei Ströme auf, der eine durchströmt zu Kühlzwecken die ND-Turbine 19, der andere Strom 23a durchströmt den niederdruckseitigen Wärmeerzeuger 18. Bei dieser Konfiguration ist das Stellglied 10b, stromauf der ND-Turbine 19 offen, während das andere Stellglied 10a, stromab des Wärmeerzeugers 18, zu ist. Bei Serieschaltung ist das Stellglied 10b geschlossen. Der ganze Teilkühlgasstrom 23 strömt über die Leitung 23a zum Wärmeerzeuger 18 und anschliessend über eine weitere Leitung 23b zur ND-Turbine 19. Es ist klar, dass bei letztgenannter Konfiguration das Stellglied 10a, stromab des Wärmeerzeugers 18, offen ist. Es ist des weiteren offensichtlich, dass sich die Kühlungstechnik im Wärmeerzeuger 18 nach der Kühlungsart der Strukturen richtet, d.h., ob parallel oder in Serie gekühlt wird. Das Druckgefälle dieses Teilkühlgasstromes lässt sich auch durch ein Druckerhöhungsgebläse 26 erzielen, das irgendwo in der Zuleitung 23 des gekühlten Abgasstromes, also der Turbinenkühlluft 21, zur ND-Turbine 19 plaziert ist, vorzugsweise an der kältesten Stelle dieser Zuleitung 23. Darüber hinaus ist es ohne weiteres möglich, den genannten Wärmetauscher 20 anstatt in der Luftleitung 4 zu plazieren, in einem Brennstoffstrom 31, vorteilhaft wenn es sich dabei um einen gasförmigen Brennstoff handelt, wirken zu lassen, wodurch dann gleichzeitig die Erwärmung ebengenannten Brennstoffes erfolgt. Ferner ist es auch, in einer nicht dargestellten Variante, möglich, den Wärmetauscher 20 in einem Haupt- oder Nebenstrom des Dampfkreislaufes zu plazieren. Die Rückkühlung des Abgsstromes in der Zuleitung 23 kann auch, alternativ oder kumulativ zum Wärmetauscher 20, durch Eindüsung einer bestimmten Menge Wasser oder Dampf 24 bewerkstelligt werden, wobei dann, in bestimmtem Fällen, ohne weiteres möglich ist, auf den Wärmetauscher 20 ganz zu verzichten. Durch die letztgenannte Massnahme ergibt sich eine Erhöhung des Kühlmediumstromes für die ND-Turbine 19, so dass die Entnahme am Expansionsende 16 allenfalls gedrosselt werden muss. Die Eindüsung von Wasser oder Dampf 24 wird mengenmässig vorzugsweise klein gehalten, weil sie neben dem Wasserverlust auch eine Minderung des Wlrkungsgrades zur Folge hat. Andererseits darf nicht unerwähnt bleiben, dass sich durch diese Massnahme die erzeugte elektrische Leistung erhöht. Bei einer Eindüsung von Dampf 24 lässt sich mit Hilfe eines Strahlapparates oder einer Zumischstelle 25 eine maximierte, erwünschte Druckerhöhung für die Kühlgasverteilung in der ND-Turbine 19 realisieren. Der einzudüsende Dampf 24 kann beliebigen Ursprunges sein. Vorteilhaft ist seine Entnahme aus dem Abhitzekessel 29, oder aus der Dampfturbine 30 des Dampfkreislaufes 33, wobei ein solcher Dampfkreislauf beispielsweise in EP-B1-0 150 340 beschrieben ist. Die Absenkung der Temperatur im Abgasstrom 17 auf das für die Kühlung der ND-Turbine 19 erforderliche Niveau lässt sich auch durch Beimischung von kälterer Luft, die über die Wasser- oder Dampf-Zuführung 24 erfolgen kann. Im durchgeschalteten Gasturbobetrieb wird diese Luft vorzugsweise an passender Anzapfstelle 28 im Kompressor 1b entnommen. Selbstveständlich kann die Entnahme auch aus der Luftleitung 4 erfolgen, wobei dann die Funktion des Strahlapparates 25 zur Druckerhöhung der Kühlluft auch hier zur Anwendung gelangt. Ein in der Zuleitung 23 des Abgasstromes zur ND-Turbine 19 plaziertes Reinigungsgerät 22 sorgt dafür, dass je nach verwendetem Brennstoff, die zur Kühlung verwendeten Turbinenabgase nachgereinigt werden können. Eine weitere, insbesondere bei Kombianlagen günstige Lösung der Turbinen- und Wärmeerzeugerkühlung, kann durch Dampf erfolgen. Der zur Speisung des hocdruckseitigen Wärmeerzeugers 7 und des niederdruckseitigen Wärmeerzeugers 18 notwendige Brennstoff 31 wird, um Exergieverluste zu minimieren, möglichst im Gegenstrom zu den Rauchgasen im Abhitzekessel 29 des Dampfprozesses 33 vorgewärmt, sofern er nicht, wie oben beschrieben, zur Rückkühlung der Turbinenkühlluft 21 verwendet wird.

### Bezeichnungsliste

- 1a, 1b: Verdichter
- 2: Zwischenkühler
- 3: Angesaugte Luft
- 4: Luftleitung aus dem Verdichter
- 5: Kaverne
- 6: Luftleitung von und zur Kaverne
- 7: Wärmeerzeuger
- 8, 9, 10: Stellglieder
- 10a, 10b: Stellglieder
- 11: Wärmetauscher
- 12: Leitungssystem im Kavernenbereich
- 13: Thermischer Speicher
- 14: Elektrische Maschine
- 15: Hochdruckturbine
- 16: Kühlgasentnahmestelle
- 17: Kühlgasleitung
- 18: Wärmeerzeuger
- 19: Niederdruckturbine
- 20: Wärmetauscher
- 21: Gekühlter Abgasstrom
- 22: Reinigungsgerät
- 23: Kühlgasstrom
- 23a, 23b: Kühlgasströme
- 24: Wasser- oder Dampf-Leitung
- 25: Strahlapparat oder Zumischstelle
- 26: Druckerhöhungsgebläse
- 27: Anzapfleitung
- 28: Anzapfstelle
- 29: Abhitzekessel
- 30: Dampfturbine
- 31, 31a: Brennstoffleitungen
- 32: Gasturbogruppe
- 33: Dampfkreislauf
- 34: Luftspeicheranlage

## Patentansprüche

1. Verfahren zum Betrieb einer Gasturbogruppe mit oder ohne integriertem Dampfprozess, im wesentlichen bestehend aus mindestens einem Verdichter, mindestens einer Gasturbine und mindestens einer elektrischen Maschine, wobei bei Aufteilung der Gasturbine in mehrere, unabhängige Druckstufen in Strömungsrichtung stromauf der ersten Gasturbine ein erster Wärmeerzeuger und stromab der ersten Gasturbine ein weiterer Wärmeerzeuger betrieben werden, dadurch gekennzeichnet, dass zur Kühlung einer oder mehrerer kalorisch belasteter Strukturen (18, 19) der Gasturbogruppe (32) ein Teilmassenstrom (17) aus einer zur Gasturbine gehörigen Hochdruckturbine (15) entnommen wird, dass dieser Teilmassenstrom (17) durch ein kühleres Medium direkt und/oder indirekt gekühlt und anschliessend durch die zu kühlenden Strukturen geleitet wird.

2. Verfahren nach Anspruch 1, dadurch gekennzeichnet, dass der Teilmassenstrom (17) zur Kühlung durch einen Wärmetauscher (20) geleitet wird, der von einem Luftstrom (4, 6) durchströmt wird.

3. Verfahren nach Anspruch 2, dadurch gekennzeichnet, dass der Luftstrom aus einer Verdichtergruppe (1a, 1b, 2) der Gasturbogruppe (32) und/oder aus einer Luftspeicheranlage (34) stammt.

4. Verfahren nach Anspruch 1, dadurch gekennzeichnet, dass der Teilmassenstrom (17) zur Kühlung durch einen Wärmetauscher (20) geleitet wird, der von einem Haupt- oder Teilstrom eines Dampfkreislaufes (33) durchströmt wird.

5. Verfahren nach Anspruch 1, dadurch gekennzeichnet, dass der Teilmassenstromm (17) zur Kühlung durch einen Wärmetauscher (20) geleitet wird, der von einem Brennstoffstrom (31, 31a) durchströmt wird.

6. Verfahren nach Anspruch 1, dadurch gekennzeichnet, dass der Teilmassenstrom (17) durch eine Eindüsung von Wasser und/oder Dampf (24) gekühlt wird.

7. Verfahren nach Anspruch 1, dadurch gekennzeichnet, dass die zu kühlenden Strukturen (18, 19) parallel oder in Serie geschaltet werden.

8. Verfahren nach den Anspruchen 1 und 6, dadurch gekennzeichnet, dass der gekühlte Teilmassenstrom (17) durch einen niederdruckseitigen Wärmeerzeuger (18) und eine Niederdruckturbine (19) geleitet wird.

9. Verfahren nach Anspruch 1, dadurch gekennzeichnet, dass der Teilmassenstrom (17) vor Durchströmung der zu kühlen den Strukturen (18, 19) durch einen Reinigungsapparat (22) geleitet wird.

10. Verfahren nach Anspruch 1, dadurch gekennzeichnet, dass der Teilmassenstrom (17) vor Durchströmung der zu kühlenden Strukturen (18, 19) durch einen Strahlapparat (25) und/oder ein Gebläse (26) geleitet wird.

## Claims

1. Method of operating a gas turbine group with or without integrated steam process, essentially comprising at least one compressor, at least one gas turbine and at least one electrical machine, where, if the gas turbine is divided into a plurality of independent pressure stages, a first heat generator is operated upstream of the first gas turbine and a further heat generator is operated downstream of the first gas turbine, characterized in that a partial mass flow (17) is extracted from a high-pressure turbine (15) belonging to the gas turbine to cool one or a plurality of thermally loaded structures (18, 19) of the gas turbine group (32) and in that this partial mass flow (17) is cooled directly and/or indirectly by a cooler medium and is subsequently passed through the structures to be cooled.

2. Method according to Claim 1, characterized in that, for cooling, the partial mass flow (17) is passed through a heat exchanger (20) through which flows an airflow (4, 6).

3. Method according to Claim 2, characterized in that the airflow originates from a compressor group (1a, 1b, 2) of the gas turbine group (32) and/or from an air storage installation (34).

4. Method according to Claim 1, characterized in that, for cooling, the partial mass flow (17) is passed through a heat exchanger (20) through which flows a main flow or a partial flow of a steam circuit (33).

5. Method according to Claim 1, characterized in that, for cooling, the partial mass flow (17) is passed through a heat exchanger (20) through which flows a fuel flow (31, 31a).

6. Method according to Claim 1, characterized in that the partial mass flow (17) is cooled by spraying in water and/or steam (24).

7. Method according to Claim 1, characterized in that the structures (18, 19) to be cooled are connected in parallel or in series.

8. Method according to Claims 1 and 6, characterized in that the cooled partial mass flow (17) is passed through a heat generator (18) at the low-pressure end and a low-pressure turbine (19).

9. Method according to Claim 1, characterized in that the partial mass flow (17) is passed through a cleaning unit (22) before flowing through the structures (18, 19) to be cooled.

10. Method according to Claim 1, characterized in that the partial mass flow (17) is passed through a jet apparatus (25) and/or a fan (26) before flowing through the structures (18, 19) to be cooled.

## Revendications

1. Procédé de conduite d'une installation de turbine à gaz avec ou sans processus de vapeur intégré, composé essentiellement d'au moins un compresseur, d'au moins une turbine à gaz et d'au moins une machine électrique, dans lequel, avec subdivision de la turbine à gaz en plusieurs étages de pression indépendants, on utilise un premier générateur de chaleur en amont de la première turbine à gaz et un autre générateur de chaleur en aval- de la première turbine à gaz, dans la direction de l'écoulement, caractérisé en ce que, pour le refroidissement d'une ou de plusieurs structures sollicitées thermiquement (18, 19) de l'installation de turbine à gaz (32), on prélève un courant massique partiel (17) dans une turbine haute pression (15) appartenant à la turbine à gaz, en ce que l'on refroidit directement et/ou indirectement ce courant massique partiel (17) par un fluide plus froid et en ce qu'on le conduit ensuite à travers les structures à refroidir.

2. Procédé suivant la revendication 1, caractérisé en ce que le courant massique partiel (17) est conduit pour le refroidissement à travers un échangeur de chaleur (20), qui est parcouru par un courant d'air (4, 6).

3. Procédé suivant la revendication 2, caractérisé en ce que le courant d'air provient d'un groupe compresseur (1a, 1b, 2) de l'installation de turbine à gaz (32) et/ou d'une installation avec réservoir d'air (34).

4. Procédé suivant la revendication 1, caractérisé én ce que le courant massique partiel (17) est conduit pour le refroidissement à travers un échangeur de chaleur (20), qui est parcouru par un courant principal ou partiel d'un circuit de vapeur (33).

5. Procédé suivant la revendication 1, caractérisé en ce que le courant massique partiel (17) est conduit pour le refroidissement à travers un échangeur de chaleur (20), qui est parcouru par un courant de combustible (31, 31a).

6. Procédé suivant la revendication 1, caractérisé en ce que le courant massique partiel (17) est refroidi par une injection d'eau et/ou de vapeur (24).

7. Procédé suivant la revendication 1, caractérisé en ce que les structures à refroidir (18, 19) sont montées en parallèle ou en série.

8. Procédé suivant les revendications 1 et 6, caractérisé en ce que le courant massique partiel (17) refroidi est conduit à travers un générateur de chaleur (18) du côté basse pression et une turbine basse pression (19).

9. Procédé suivant la revendication 1, caractérisé en ce que le courant massique partiel (17) est conduit à travers un appareil d'épuration (22) avant de parcourir les structures à refroidir (18, 19).

10. Procédé suivant la revendication 1, caractérisé en ce que le courant massique partiel (17) est conduit à travers un appareil à jet (25) et/ou une soufflante (26) avant de parcourir les structures à refroidir (18, 19).
